# FASCICULE DE BREVET EUROPEEN

(11) **EP 3 164 620 B1**
(45) Date de publication et mention de la délivrance du brevet: **06.06.2018**
(21) Numéro de dépôt: 15756949.2
(22) Date de dépôt: 24.06.2015
(51) Int. Cl.: F16D 13/68, F16F 15/123

(54) **AMORTISSEUR DE TORSION POUR SYSTÈME DE TRANSMISSION DE VÉHICULE**
SCHWINGUNGSDÄMPFER FÜR FAHRZEUGGETRIEBESYSTEM
VIBRATION DAMPER FOR VEHICLE TRANSMISSION SYSTEM

(30) Priorité: 04.07.2014 FR 1456420
(43) Date de publication de la demande: 10.05.2017
(73) Titulaire: Valeo Embrayages, 80009 Amiens Cedex 2 (FR)
(72) Inventeur: MALLEY, Matthieu, F-60000 Beauvais (FR); NERRIERE, Adrien, F-80009 Amiens (FR)
(74) Mandataire: Cardon, Nicolas
(86) Numéro de dépôt international: PCT/FR2015/051693
(87) Numéro de publication internationale: WO 2016/001528

(56) Documents cités:
- DE-A1- 19 611 507
- FR-A1- 2 599 800
- FR-A1- 2 794 505

## Description

La présente invention concerne un amortisseur de torsion pour système de transmission de véhicule.

L'invention s'applique notamment, mais non exclusivement, aux véhicules dits industriels, ces derniers étant par exemple des poids lourds, véhicules de transport en commun, ou véhicules agricoles.

Afin d'améliorer les performances de filtrage d'un amortisseur de torsion, on peut choisir d'utiliser des ressorts plus longs et plus larges et de les disposer dans des fenêtres de l'amortisseur sur des rayons d'implantation plus grands. Dans le cas où cet amortisseur est intégré à un disque de friction pour embrayage, les ressorts génèrent un effort s'opposant à la rotation de rondelles de guidage du disque par rapport à un voile du disque. Avec une telle dimension et un tel positionnement, les ressorts engendrent aux hautes vitesses de rotation du moteur du véhicule des forces centrifuges importantes, susceptibles d'endommager le voile et/ou les rondelles de guidage avec les bords radialement extérieurs des fenêtres desquels il vient en contact. Ce contact peut en effet générer des usures importantes, voire des ruptures, de ces pièces ainsi que des pics d'hystérésis, affectant les performances de filtrage de l'amortisseur.

Pour résoudre ce problème, il est connu, par exemple de la demande FR 2 732 426 de munir chaque extrémité angulaire d'un ressort d'un siège venant en appui sur le voile pour reprendre ces forces centrifuges. Cependant, de tels sièges ne permettent pas d'éviter la venue en contact des ressorts avec les bords radialement extérieurs des fenêtres du voile ou des rondelles de guidage à partir d'une certaine vitesse de rotation du moteur. FR 2 599 800 donne une autre exemple d'amortisseur de torsion muni de support de ressorts. Il existe un besoin pour réduire l'usure d'élément(s) de l'amortisseur avec le(s)quel(s) les ressorts peuvent venir en contact sous l'effet de forces centrifuges liées à la rotation du moteur du véhicule, y compris pour des vitesses de rotation importantes.

L'invention vise à répondre à ce besoin et elle y parvient, selon l'un de ses aspects, à l'aide d'un amortisseur de torsion pour système de transmission de véhicule, comprenant :
- un élément d'entrée mobile en rotation autour d'un axe, et présentant au moins une fenêtre comprenant deux bords latéraux espacés angulairement et un bord radialement extérieur,
- un élément de sortie mobile en rotation autour de l'axe, et présentant au moins une fenêtre comprenant deux bords latéraux espacés angulairement et un bord radialement extérieur, un organe de rappel élastique étant apte à être reçu à la fois dans la fenêtre de l'élément d'entrée et dans la fenêtre de l'élément de sortie de manière à générer un effort s'opposant à la rotation de l'élément de sortie par rapport à l'élément d'entrée, et
- un élément additionnel mobile en rotation autour de l'axe et solidaire de l'un de l'élément d'entrée et de l'élément de sortie, l'élément additionnel présentant au moins un bord, ledit bord de l'élément additionnel comprenant au moins une portion faisant radialement saillie dans la fenêtre de celui de l'élément d'entrée et de l'élément de sortie dont l'élément additionnel est solidaire.

Selon l'invention, cette portion faisant saillie du bord de l'élément additionnel peut alors venir au contact de l'organe de rappel élastique lorsque ce dernier est soumis à des forces centrifuges importantes, ce contact remplaçant le contact selon l'art antérieur entre organe de rappel élastique et bord radialement extérieur de la fenêtre de l'élément d'entrée ou de sortie. L'invention permet ainsi, grâce à ce contact, de faire supporter en partie par l'élément additionnel les forces centrifuges appliquées sur l'organe de rappel élastique, contrairement au cas dans lequel la totalité de ces efforts est supportée par l'élément d'entrée ou de sortie contre un bord duquel vient en contact l'organe de rappel élastique. On protège ainsi l'élément d'entrée et/ou l'élément de sortie des problèmes d'usure mentionnés ci-dessus. La tenue en centrifugation de l'élément d'entrée et/ou de l'élément de sortie de l'amortisseur est alors améliorée.

L'organe de rappel élastique, en venant au contact de ladite portion du bord de l'élément additionnel, peut alors ne plus venir au contact de bords de l'élément d'entrée et de l'élément de sortie, protégeant ainsi chacun de ces derniers.

Le bord radialement extérieur de la fenêtre de celui de l'élément d'entrée et de sortie qui est solidaire de l'élément additionnel vient par exemple en contact avec l'organe de rappel élastique en dehors de l'espace radial en regard de ladite portion de l'élément additionnel. Ainsi selon certaines vitesses de rotation du moteur, l'organe de rappel élastique vient uniquement en contact du bord radialement extérieur de la fenêtre de l'élément d'entrée ou de l'élément de sortie, ou conjointement en contact du bord radialement extérieur de la fenêtre de l'élément d'entrée ou de l'élément de sortie et de la ladite portion du bord de l'élément additionnel.

Le bord de l'élément additionnel dans lequel est ménagée ladite portion faisant saillie peut être le bord radialement extérieur d'une fenêtre comprenant par ailleurs deux bords latéraux espacés angulairement.

L'élément additionnel présente par exemple plusieurs fenêtres. L'élément additionnel peut être d'un seul tenant et s'étendre tout autour de l'axe.

Selon un mode de réalisation de l'invention, l'élément additionnel de l'amortisseur de torsion peut être solidaire en rotation de l'élément d'entrée. Dans un tel cas, l'élément additionnel est mobile en rotation par rapport à l'élément de sortie. L'élément additionnel de l'amortisseur de torsion est par exemple décalé axialement par rapport à l'élément d'entrée.

Selon un autre mode de réalisation de l'invention, l'élément additionnel de l'amortisseur de torsion est solidaire en rotation de l'élément de sortie. Dans un tel cas, l'élément additionnel est mobile en rotation par rapport à l'élément d'entrée.

Au sens de la présente demande, « axialement » signifie « parallèlement à l'axe de rotation », « radialement » signifie « le long d'un axe appartenant à un plan perpendiculaire à l'axe de rotation et coupant cet axe de rotation », et « angulairement » ou « circonférentiellement » signifie « autour de l'axe de rotation ».

L'amortisseur peut comprendre un organe de rappel élastique reçu à la fois dans la fenêtre de l'élément d'entrée et dans la fenêtre de l'élément de sortie de manière à générer un effort s'opposant à la rotation de l'élément de sortie par rapport à l'élément d'entrée, l'organe de rappel élastique étant également reçu radialement intérieurement par rapport audit bord de l'élément additionnel, notamment dans la fenêtre de l'élément additionnel. Un tel organe de rappel permet de filtrer les oscillations de torsion se propageant dans le système de transmission du véhicule. Cet organe de rappel peut présenter des extrémités aptes à venir en appui contre les bords latéraux de la fenêtre correspondante de l'élément d'entrée et de la fenêtre correspondante de l'élément de sortie. Chaque organe de rappel élastique est par exemple un ressort courbe ou droit. Le cas échéant, chaque organe de rappel élastique peut être formé par deux ressorts en parallèle ou en série, voire par des branches en parallèle de ressorts en série.

Chaque extrémité angulaire de l'organe de rappel élastique peut être au contact d'un siège.

Lorsque l'amortisseur est au repos, chaque siège vient en appui à la fois sur un bord latéral de la fenêtre recevant ledit organe de rappel élastique de l'élément d'entrée, et sur un bord latéral de la fenêtre recevant ledit organe de rappel élastique de l'élément de sortie. Au sens de la présente demande, l'amortisseur est au repos lorsqu'il ne transmet aucun couple.

Dans les autres positions de l'amortisseur, l'un des sièges vient en appui sur un bord latéral de la fenêtre recevant ledit organe de rappel élastique de l'élément d'entrée, et l'autre siège vient en appui sur un bord latéral de la fenêtre recevant ledit organe de rappel élastique de l'élément de sortie.

Ces sièges peuvent reprendre une partie des forces centrifuges exercées sur l'organe de rappel élastique.

Avantageusement le montage de l'organe de rappel élastique dans l'élément d'entrée et dans l'élément de sortie se fait sous précontrainte de sorte que l'organe de rappel élastique ne peut pas se décrocher ou occuper une position non souhaitée.

De préférence, la portion du bord de l'élément additionnel, ce dernier étant notamment le bord radialement extérieur de la fenêtre dudit élément additionnel, faisant saillie dans la fenêtre de celui de l'élément d'entrée et de l'élément de sortie dont l'élément additionnel est solidaire est une portion centrale dudit bord. Cette portion centrale est par exemple située à mi-longueur de ce bord, notamment à mi-chemin entre les deux bords latéraux de ladite fenêtre. Par cette localisation de cette portion au centre dudit bord de l'élément additionnel, cette portion faisant saillie ne vient en contact avec l'organe de rappel élastique que lorsque ce dernier est soumis à des forces centrifuges importantes. Ainsi, la portion faisant saillie n'interfère pas avec la trajectoire de l'organe de rappel élastique lorsque ce dernier n'est soumis qu'à de faibles forces centrifuges, contrairement à ce qui se produirait si la portion faisant saillie était disposée à proximité d'une extrémité angulaire de ce bord de l'élément additionnel.

La portion faisant saillie peut être rectiligne.

En variante, ladite portion faisant saillie peut être non rectiligne, par exemple concave, convexe ou autre.

La portion faisant saillie peut être symétrique par rapport à un plan qui peut être un plan médian pour le bord dans lequel cette portion est ménagée, notamment un plan médian pour la fenêtre dont ce bord constitue le bord radialement extérieur. Une telle portion faisant saillie garantit ainsi un contact selon des caractéristiques identiques entre la pièce additionnelle et l'organe de rappel élastique soumis à des forces centrifuges dans les deux sens de rotation autour de l'axe.

La portion faisant saillie peut s'étendre continument le long d'une fraction dudit bord, ce dernier étant notamment le bord radialement extérieur de l'élément additionnel. En variante, cette portion peut s'étendre de façon discontinue, plusieurs sous-portions distinctes se succédant alors angulairement.

Le rapport entre l'angle mesuré depuis l'axe de rotation entre les extrémités angulaires de ladite portion faisant saillie et l'angle mesuré depuis l'axe de rotation entre les extrémités angulaires du bord de l'élément additionnel dans lequel cette portion est ménagée, ce dernier étant notamment le bord radialement extérieur d'une fenêtre de l'élément additionnel, peut être compris entre 0,15 et 0,5 étant notamment compris entre 0,15 et 0,30. Ainsi cette portion faisant saillie peut ne nécessiter qu'une modification très locale de la forme dudit bord, ce dernier étant notamment le bord radialement extérieur de la fenêtre de l'élément additionnel.

La distance maximale selon laquelle ladite portion fait saillie dans la fenêtre de celui de l'élément d'entrée et de l'élément de sortie dont l'élément additionnel est solidaire peut être d'au moins 0,2 mm. Cette distance maximale est mesurée entre ledit bord de l'élément additionnel, étant notamment le bord radialement extérieur de la fenêtre de l'élément additionnel, et le bord radialement extérieur de l'élément dont il est solidaire, au centre de ladite portion et orthogonalement à celle-ci. Cette valeur de distance maximale est particulièrement adaptée pour, lors de la déformation de l'organe de rappel élastique lorsqu'il est soumis à des forces centrifuges, venir en contact via ladite portion avec cet organe de rappel élastique.

Le rapport entre la valeur maximale selon laquelle la portion fait saillie et la dimension radiale maximale de l'élément d'entrée ou de sortie dont l'élément additionnel est solidaire peut être compris entre 0, 003 et 0,01.

La liaison rigide entre l'élément additionnel et celui de l'élément d'entrée et de l'élément de sortie dont l'élément additionnel est solidaire comprend par exemple des rivets.

En variante, cette liaison rigide comprend une soudure locale de la partie de l'élément additionnel définie radialement intérieurement par ledit bord de l'élément additionnel, ce dernier étant notamment le bord radialement extérieur de la fenêtre de l'élément additionnel, et de la partie de l'élément d'entrée ou de sortie définie radialement intérieurement par le bord radialement extérieur de sa fenêtre. Dans ce dernier cas, la liaison peut être obtenue par des points de soudure ou une soudure locale.

Dans une autre variante, la liaison rigide comprend et les rivets et la soudure locale mentionnées ci-dessus.

Dans tout ce qui précède, la fenêtre de l'élément d'entrée et/ou la fenêtre de l'élément de sortie et/ou la fenêtre de l'élément additionnel peut présenter un contour fermé, ayant par exemple un bord radialement intérieur sensiblement en regard du bord radialement extérieur et reliant les bords latéraux de ladite fenêtre.

Dans ce cas, le bord radialement intérieur de la fenêtre ménagée dans l'élément additionnel peut comprendre au moins une portion radialement en deçà du bord radialement intérieur de la fenêtre ménagée dans celui de l'élément d'entrée et de sortie solidaire dudit élément additionnel

L'élément d'entrée peut présenter une pluralité de fenêtres se succédant angulairement, chaque fenêtre comprenant deux bords latéraux espacés angulairement et un bord radialement extérieur, l'élément de sortie peut présenter une pluralité de fenêtres se succédant angulairement, chaque fenêtre comprenant deux bords latéraux espacés angulairement et un bord radialement extérieur, et l'élément additionnel peut présenter une pluralité de fenêtres, chaque fenêtre comprenant deux bords latéraux espacés angulairement et un bord radialement extérieur. Chaque fenêtre de l'élément additionnel peut alors être axialement en regard d'au moins une fraction d'une fenêtre de l'élément de sortie et d'au moins une fraction d'une fenêtre de l'élément d'entrée.

Un organe de rappel élastique est par exemple reçu dans une fenêtre de l'élément d'entrée, dans une fenêtre de l'élément de sortie et cet organe de rappel est alors apte à venir au contact de la portion faisant saillie d'une fenêtre de l'élément additionnel.

Chaque élément de l'amortisseur comprend entre une et six fenêtres, par exemple quatre fenêtres.

Chaque fenêtre ménagée dans l'élément additionnel peut s'étendre sur un secteur angulaire mesuré depuis l'axe du moyeu entre deux extrémités angulaires du bord radialement extérieur de ladite fenêtre qui est supérieur à la valeur du secteur angulaire mesuré depuis ce même axe du moyeu entre deux extrémités angulaires du bord radialement extérieur de la fenêtre de celui de l'élément d'entrée et de sortie solidaire de l'élément additionnel.

L'amortisseur est par exemple apte à être intégré à un disque de friction pour embrayage, l'élément d'entrée étant formé par un voile, l'élément de sortie étant formé par deux rondelles de guidage entourant axialement le voile, et l'élément additionnel étant formé par un disque support apte à supporter au moins une garniture de friction, notamment des garnitures de friction, notamment toutes les garnitures de friction du disque de friction. Les deux rondelles de guidage sont avantageusement solidarisées via des rivets.

Lorsque l'élément additionnel est un disque support solidaire du voile de l'amortisseur, on parlera d'un disque symétrique. Le voile est alors axialement situé dans l'espace délimité par les deux rondelles de guidage.

En variante, lorsque l'élément additionnel est un disque support solidaire des rondelles de guidage, on parlera de disque asymétrique.

L'invention a encore pour objet, selon un autre de ses aspects, un disque de friction pour embrayage, comprenant :
- un moyeu s'étendant selon un axe,
- un amortisseur de torsion tel que défini ci-dessus, et
- au moins une garniture de friction, portée par le disque support de l'amortisseur.

L'axe selon lequel s'étend ledit moyeu peut être confondu avec l'axe de rotation des éléments d'entrées.

Le disque peut comprendre deux garnitures de friction. Seule l'une d'entre elles peut être portée par le disque support. En variante, chaque garniture de friction est portée par le disque support.

L'invention pourra être mieux comprise à la lecture de la description qui va suivre d'un exemple non limitatif de mise en oeuvre de celle-ci et à l'examen du dessin annexé sur lequel :
- la figure 1 représente de façon schématique un disque de disque de friction comprenant un amortisseur selon un exemple de mise en oeuvre de l'invention,
- la figure 2 est une vue selon l'axe du disque d'une portion de ce dernier, et
- la figure 3 représente le détail III de la figure 2.

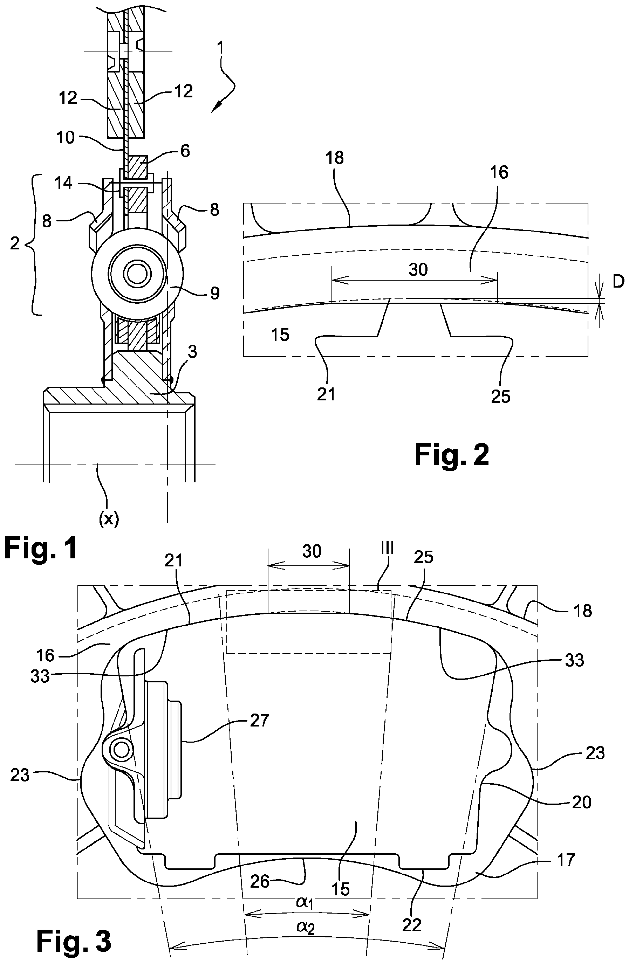

On a représenté à la figure 1 un disque de friction 1 muni d'un amortisseur de torsion 2 selon un exemple de mise en oeuvre de l'invention. Ce disque de friction 1 comprend un moyeu 3 s'étendant selon un axe X. Le moyeu 3 est par exemple monté sur une portion d'un arbre d'entrée non représenté d'une boîte de vitesses et solidaire en rotation de cet arbre.

De façon connue, l'amortisseur 2 comprend un élément d'entrée 6 et un élément de sortie 8 entre lesquels est interposé un organe de rappel élastique 9, ce dernier permettant un déplacement en rotation limité entre les éléments d'entrée 6 et de sortie 8. Dans l'exemple décrit, l'élément d'entrée 6 est formé par un voile rigidement couplé à un disque support 10 de garnitures de friction 12. Le disque support 10 forme un élément additionnel pour l'amortisseur 2. Le couplage rigide entre le voile 6 et le disque support 10 est par exemple effectué à l'aide de rivets 14.

Comme on peut le voir sur la figure 1, l'élément de sortie 8 est ici formé par deux rondelles de guidage axialement décalées et disposées axialement autour du voile 6. Les rondelles de guidage 8 sont solidaires et fixées en rotation sur le moyeu 3, par exemple au moyen de cannelures.

Dans l'exemple considéré, l'amortisseur 2 comprend une pluralité d'organes de rappel élastique 9 se succédant angulairement, chaque organe de rappel élastique 9 étant à la fois reçu dans cet exemple:
- dans une fenêtre 15 ménagée dans le voile 6,
- dans une fenêtre 17 ménagée dans le disque support 10, et
- dans une fenêtre ménagée dans les rondelles de guidage 8.

On va maintenant décrire plus en détail les fenêtres 15 et 17 en référence à la figure 2 sur laquelle les rondelles de guidage 8 ne sont pas représentées pour des raisons de clarté.

Une fois le voile 6 et le disque support 10 solidarisés à l'aide des rivets 14, chaque fenêtre 15 du voile 6 est axialement et radialement en regard d'une fenêtre 17 du disque support 10.

Chaque fenêtre 15 ménagée dans le voile 6 est délimitée d'une part par :
- deux bords latéraux 20 espacés angulairement, et
- un bord radialement extérieur 21 et un bord radialement intérieur 22.

Le bord radialement extérieur 21 d'une fenêtre 15 délimite un bandeau 16 du voile s'étendant jusqu'au bord radialement extérieur 18 dudit voile 6. En plus de l'emploi des rivets 14 pour coupler rigidement le voile 6 et le disque support 10, chaque bandeau 16 du voile peut être fixé par soudure locale à la partie du disque support 10 axialement et radialement en regard de celle-ci.

Chaque fenêtre 17 est délimitée d'une part par :
- deux bords latéraux 23 espacés angulairement, et
- un bord radialement extérieur 25 et un bord radialement intérieur 26.

Comme on peut le voir sur la figure 2, les bords des fenêtres 15 et 17 ne sont ici pas rectilignes. Les bords de la fenêtre 17 ménagée dans le disque support 10 présentent sur la figure 1 des portions incurvées. Le bord radialement intérieur 22 de la fenêtre 15 ménagée dans le disque support 10 présente sur la figure 1 une succession de créneaux.

Dans l'exemple représenté, le bord radialement intérieur 26 de la fenêtre 17 ménagée dans le disque support 10 est sur toute sa longueur radialement en deça du bord 22 radialement intérieur de la fenêtre 15 ménagée dans le voile 6. Autrement dit, le bord 22 fait ici sur toute sa longueur saillie dans la fenêtre 17 ménagée dans le disque support 10.

Comme représenté sur la figure 2, chaque fenêtre 15 ménagée dans le voile 6 s'étend sur un secteur angulaire mesuré depuis l'axe du moyeu X entre deux extrémités angulaires du bord radialement extérieur 21 qui est inférieur à la valeur du secteur angulaire mesuré depuis ce même axe X entre deux extrémités angulaires du bord radialement extérieur 25 de la fenêtre en regard qui est ménagée dans le disque support 10.

Chaque organe de rappel élastique 9 est dans l'exemple considéré un ressort s'étendant entre deux extrémités angulaires, chaque extrémité angulaire venant en appui contre :
- le voile 6,
- le disque support 10, et
- les rondelles de guidage 8.

Dans l'exemple de la figure 2, chaque extrémité angulaire du ressort 9 vient au contact d'un siège 27. Lorsque l'amortisseur 2 est au repos, chaque siège 27 vient en appui à la fois sur le voile 6 au niveau d'un bord latéral 20 de la fenêtre 15 ménagée dans ce voile 6 et sur les rondelles de guidage 18 au niveau d'un bord latéral des fenêtres ménagées dans ces rondelles de guidage 18.

Comme on peut le voir sur la figure 3, le bord radialement extérieur 25 de la fenêtre 17 ménagée dans le disque support 10 comprend une portion 30 faisant radialement saillie dans la fenêtre 15 ménagée dans le voile 6. Dans l'exemple représenté, la portion 30 est une portion centrale pour le bord radialement extérieur 25 de la fenêtre 17 ménagée dans le disque support 10. La portion 30 est ici unique, c'est-à-dire qu'en dehors de cette portion 30, le bord radialement extérieur 25 de la fenêtre 17 ne fait pas saillie dans la fenêtre 15 ménagée dans le voile 6. La portion 30 de l'exemple considéré est par ailleurs rectiligne. Le reste du bord radialement extérieur 25 de la fenêtre 17 est dans l'exemple de la figure 2 formé par des portions concaves 33.

La portion 30 présente une longueur faible par rapport à la longueur totale du bord radialement extérieur 25, le rapport entre l'angle α₁ mesuré depuis l'axe X entre les extrémités angulaires de ladite portion 30 et l'angle α₂ mesuré depuis ce même axe X entre les extrémités angulaires du bord radialement extérieur 25 de la fenêtre 17 ménagée dans le disque support 10 est ici compris entre 0,15 et 0,5, étant notamment compris entre 0,15 et 0,30.

Par ailleurs la distance maximale D selon laquelle la portion 30 fait saillie dans la fenêtre 15 ménagée dans le voile 6 est ici au moins égale à 0,2 mm. Cette distance maximale D est mesurée comme on peut le voir sur la figure 3 entre les bords radialement extérieurs 21 et 25 au centre de la portion 30, orthogonalement à ladite portion 30.

Lorsque le voile 6 est déplacé en rotation sous l'effet d'un couple exercé par le moteur thermique associé au système de transmission auquel le disque de friction 1 est intégré, ce voile 6 déplace chaque organe de rappel élastique 9 sur lesquels des forces centrifuges sont exercées. Tant que les forces centrifuges restent inférieures à une valeur donnée, l'organe de rappel élastique 9 ne vient pas au contact de la portion 30 du bord radialement extérieur 25 de la fenêtre ménagée dans le disque support 10 qui fait saillie dans la fenêtre 15 ménagée dans le voile. La présence des portions 30 ne modifie pas le fonctionnement du disque de friction 1.

Lorsque les forces centrifuges exercées sur chaque organe de rappel élastique deviennent trop importantes, l'organe de rappel élastique se déplace radialement dans la fenêtre 15 jusqu'à venir au contact de la portion 30 du bord radialement extérieur 25 de la fenêtre 17 ménagée dans le disque support 10. Grâce à ce contact, le disque support 10, qui est plus solide que le voile 6, reprend une partie des forces centrifuges appliquées selon l'art antérieur uniquement sur le voile 6. Le disque support 10 joue ainsi le rôle d'élément additionnel de l'amortisseur 2 réduisant les risques d'usure du voile 6.

L'invention n'est pas limitée à ce qui vient d'être décrit. Dans d'autres exemples non représentés, l'élément d'entrée de l'amortisseur 2 est formé par les rondelles de guidage auxquelles est solidarisé le disque support 10, l'élément de sortie de l'amortisseur 2 étant formé par le voile 6. Dans ce cas, la portion 30 du bord radialement extérieur 25 de la fenêtre 17 ménagée dans le disque support 10 fait saillie dans la fenêtre ménagée dans la rondelle de guidage.

Dans d'autres exemples, le disque support 10 est dépourvu de fenêtres, le bord 25 étant alors un bord de ce disque 10.

L'expression « comprenant un » doit être comprise comme synonyme de l'expression « comprenant au moins un », sauf lorsque le contraire est spécifié.

## Revendications

1. Amortisseur de torsion (2) pour système de transmission de véhicule, comprenant :
- un élément d'entrée (6) mobile en rotation autour d'un axe (X), et présentant au moins une fenêtre (15) comprenant deux bords latéraux (20) espacés angulairement et un bord radialement extérieur (21),
- un élément de sortie (8) mobile en rotation autour de l'axe (X), et présentant au moins une fenêtre comprenant deux bords latéraux espacés angulairement et un bord radialement extérieur, un organe de rappel élastique (9) étant apte à être reçu à la fois dans la fenêtre (15) de l'élément d'entrée (6) et dans la fenêtre de l'élément de sortie (8) de manière à générer un effort s'opposant à la rotation de l'élément de sortie (8) par rapport à l'élément d'entrée (6), et
- un élément additionnel (10) mobile en rotation autour de l'axe (X) et solidaire de l'un de l'élément d'entrée (6) et de l'élément de sortie (8), l'élément additionnel (10) présentant au moins un bord (25), ledit bord (25) comprenant au moins une portion (30) faisant radialement saillie dans la fenêtre (15) de celui de l'élément d'entrée (6) et de l'élément de sortie (8) dont l'élément additionnel (10) est solidaire,
l'amortisseur (2) étant apte à être intégré à un disque de friction (1) pour embrayage, l'élément d'entrée (6) étant formé par un voile, l'élément de sortie (8) étant formé par deux rondelles de guidage entourant axialement le voile,
et l'amortisseur étant **caractérisé en ce que** l'élément additionnel (10) étant formé par un disque support apte à supporter au moins une garniture de friction.

2. Amortisseur de torsion (2) selon la revendication 1, l'élément additionnel (10) étant solidaire de l'élément d'entrée (6).

3. Amortisseur (2) selon la revendication 1 ou 2, comprenant un organe de rappel élastique (9) reçu à la fois dans la fenêtre (15) de l'élément d'entrée (6) et dans la fenêtre de l'élément de sortie de manière à générer un effort s'opposant à la rotation de l'élément de sortie par rapport à l'élément d'entrée (6), l'organe de rappel élastique (9) étant également reçu radialement intérieurement par rapport au bord (25) de l'élément additionnel (10).

4. Amortisseur (2) selon les revendications 2 et 3, chaque extrémité angulaire de l'organe de rappel élastique (9) étant au contact d'un siège (27).

5. Amortisseur (2) selon l'une quelconque des revendications précédentes, ladite portion (30) du bord (25) de l'élément additionnel (10) étant une portion centrale dudit bord (25).

6. Amortisseur (2) selon l'une quelconque des revendications 1 à 5, ladite portion (30) du bord (25) de l'élément additionnel (10) étant rectiligne.

7. Amortisseur (2) selon l'une quelconque des revendications précédentes, le rapport entre l'angle (α₁) mesuré depuis l'axe de rotation (X) entre les extrémités angulaires de ladite portion (30) et l'angle (α₂) mesuré depuis l'axe de rotation entre les extrémités angulaires du bord (25) de l'élément intermédiaire (10) dans lequel est ménagée cette portion (30) étant compris entre 0,15 et 0,5, notamment entre 0,15 et 0,30.

8. Amortisseur (2) selon l'une quelconque des revendications précédentes, la distance maximale (D) selon laquelle ladite portion (30) fait saillie dans la fenêtre de celui de l'élément d'entrée (6) et de l'élément de sortie (8) dont l'élément additionnel (10) est solidaire étant au moins égale à 0,2 mm.

9. Amortisseur (2) selon l'une quelconque des revendications précédentes, la liaison rigide entre l'élément additionnel (10) et celui de l'élément d'entrée (6) et de l'élément de sortie (8) dont l'élément additionnel (10) est solidaire comprenant des rivets (14).

10. Amortisseur (2) selon la revendication 9, la liaison rigide entre l'élément additionnel (10) et celui de l'élément d'entrée (6) et de l'élément de sortie (8) dont l'élément additionnel est solidaire comprenant une soudure locale de la partie de l'élément additionnel (10) définie radialement intérieurement par le bord (25) de l'élément additionnel et de la partie de l'élément d'entrée (6) ou de sortie (8) définie radialement extérieurement par le bord radialement extérieur de sa fenêtre.

11. Amortisseur (2) selon l'une quelconque des revendications précédentes,
l'élément d'entrée (6) présentant une pluralité de fenêtres (15) se succédant angulairement, chaque fenêtre (15) comprenant deux bords latéraux (20) espacés angulairement et un bord radialement extérieur (21),
l'élément de sortie (8) présentant une pluralité de fenêtres se succédant angulairement, chaque fenêtre comprenant deux bords latéraux espacés angulairement et un bord radialement extérieur, et
l'élément additionnel (10) présentant une pluralité de fenêtres (17), chaque fenêtre (17) comprenant deux bords latéraux (23) espacés angulairement et un bord radialement extérieur (25) dans lequel est ménagée ladite portion (30) faisant saillie,
chaque fenêtre (17) de l'élément additionnel (10) étant axialement en regard d'au moins une fraction d'une fenêtre de l'élément de sortie (8) et d'au moins une fraction d'une fenêtre de l'élément d'entrée (6).

12. Disque de friction (1) pour embrayage, comprenant :
- un moyeu (3) s'étendant selon un axe,
- un amortisseur de torsion (2) selon l'une quelconque des revendications 1 à 11, et
- au moins une garniture de friction (12), portée par le disque support de l'amortisseur (10).

## Patentansprüche

1. Schwingungsdämpfer (2) für ein Fahrzeuggetriebesystem, umfassend:
- ein Eingangselement (6), das drehbar um eine Achse (X) ist und mindestens ein Fenster (15) aufweist, das zwei winkelmäßig beabstandete Seitenkanten (20) und eine radial äußere Kante (21) aufweist,
- ein Ausgangselement (8), das drehbar um die Achse (X) ist und mindestens ein Fenster aufweist, das zwei winkelmäßig beabstandete Seitenkanten und eine radial äußeren Kante aufweist, wobei ein elastisches Rückstellorgan (9) geeignet ist, gleichzeitig in dem Fenster (15) des Eingangselements (6) und in dem Fenster des Ausgangselements (8) derart aufgenommen zu werden, um eine Kraft zu erzeugen, die der Drehung des Ausgangselements (8) gegenüber dem Eingangselement (6) entgegenwirkt, und
- ein zusätzliches Element (10), das drehbar um die Achse (X) ist und mit einem des Eingangselements (6) und des Ausgangselements (8) fest verbunden ist, wobei das zusätzliche Element (10) mindestens eine Kante (25) aufweist, wobei die Kante (25) mindestens einen Abschnitt (30) aufweist, der radial in das Fenster (15) von jener des Eingangselements (6) und des Ausgangselements (8) ragt, mit dem das zusätzliche Element (10) fest verbunden ist,
wobei der Dämpfer (2) geeignet ist, in eine Kupplungsreibscheibe (1) integriert zu werden, wobei das Eingangselement (6) durch einen Flansch gebildet ist, wobei das Ausgangselement (8) durch zwei Führungsscheiben gebildet ist, die den Flansch axial umgeben,
und wobei der Dämpfer **dadurch gekennzeichnet ist, dass** das zusätzliche Element (10) durch eine Stützscheibe gebildet ist, die geeignet ist, mindestens einen Reibbelag zu tragen.

2. Schwingungsdämpfer (2) nach Anspruch 1, wobei das zusätzliche Element (10) mit dem Eingangselement (6) fest verbunden ist.

3. Schwingungsdämpfer (2) nach Anspruch 1 oder 2, umfassend ein elastisches Rückstellorgan (9), das gleichzeitig in dem Fenster (15) des Eingangselements (6) und in dem Fenster des Ausgangselements derart aufgenommen wird, um eine Kraft zu erzeugen, die der Drehung des Ausgangselements gegenüber dem Eingangselement (6) entgegenwirkt, wobei das elastische Rückstellorgan (9) auch radial innen bezüglich der Kante (25) des zusätzlichen Elements (10) aufgenommen ist.

4. Schwingungsdämpfer (2) nach Anspruch 2 und 3, wobei jedes Winkelende des elastischen Rückstellorgans (9) mit einem Sitz (27) in Kontakt ist.

5. Schwingungsdämpfer (2) nach einem der vorhergehenden Ansprüche, wobei der Abschnitt (30) der Kante (25) des zusätzlichen Elements (10) ein zentraler Abschnitt der Kante (25) ist.

6. Schwingungsdämpfer (2) nach einem der Ansprüche 1 bis 5, wobei der Abschnitt (30) der Kante (25) des zusätzlichen Elements (10) geradlinig ist.

7. Schwingungsdämpfer (2) nach einem der vorhergehenden Ansprüche, wobei das Verhältnis zwischen dem Winkel (α₁), der von der Drehachse (X) zwischen den Winkelenden des Abschnitts (30) gemessen ist, und dem Winkel (α₂), der von der Drehachse zwischen den Winkelenden der Kante (25) des Zwischenelements (10) gemessen ist, in dem dieser Abschnitt (30) ausgebildet ist, zwischen 0,15 und 0,5, insbesondere zwischen 0,15 und 0,30 beträgt.

8. Schwingungsdämpfer (2) nach einem der vorhergehenden Ansprüche, wobei der maximale Abstand (D), wonach der Abschnitt (30) in das Fenster von jenem des Eingangselements (6) und des Ausgangselements (8) ragt, mit dem das zusätzliche Element (10) fest verbunden ist, mindestens 0,2 mm beträgt.

9. Schwingungsdämpfer (2) nach einem der Ansprüche, wobei die feste Verbindung zwischen dem zusätzlichen Element (10) und jener des Eingangselements (6) und des Ausgangselements (8), mit dem das zusätzliche Element (10) fest verbunden ist, Nieten (14) aufweist.

10. Schwingungsdämpfer (2) nach Anspruch 9, wobei die feste Verbindung zwischen dem zusätzlichen Element (10) und jener des Eingangselements (6) und des Ausgangselements (8), mit dem das zusätzliche Element fest verbunden ist, eine lokale Schweißnaht des Teils des zusätzlichen Elements (10) aufweist, der radial innen von der Kante (25) des zusätzlichen Elements und dem Teil des Eingangselements (6) oder Ausgangselements (8) definiert ist, der radial außen von der radial äußeren Kante seines Fensters definiert ist.

11. Schwingungsdämpfer (2) nach einem der vorhergehenden Ansprüche, wobei das Eingangselement (6) mehrere Fenster (15) aufweist, die winkelmäßig aufeinanderfolgen, wobei jedes Fenster (15) zwei winkelmäßig beabstandete Seitenkanten (20) und eine radial äußere Kante (21) aufweist,
wobei das Ausgangselement (8) mehrere Fenster aufweist, die winkelmäßig aufeinanderfolgen, wobei jedes Fenster zwei winkelmäßig beabstandete Seitenkanten und eine radial äußere Kante aufweist, und
wobei das zusätzliche Element (10) mehrere Fenster (17) aufweist, wobei jedes Fenster (17) zwei winkelmäßig beabstandete Seitenkanten (23) und eine radial äußere Kante (25) aufweist, in der der hineinragende Abschnitt (30) ausgebildet ist,
wobei jedes Fenster (17) des zusätzlichen Elements (10) mindestens einem Bruchteil eines Fensters des Ausgangselements (8) und mindestens einem Bruchteil eines Fensters des Eingangselements (6) axial zugewandt ist.

12. Kupplungsreibscheibe (1), umfassend:
- eine Nabe (3), die sich gemäß einer Achse erstreckt,
- Schwingungsdämpfer (2) nach einem der Ansprüche 1 bis 11 und
- mindestens einen Reibbelag (12), der von der Stützscheibe des Dämpfers (10) getragen ist.

## Claims

1. A torsional damper (2) for a vehicle transmission system, comprising:
- an input element (6) rotationally movable around an axis (X) and exhibiting at least one window (15) comprising two angularly spaced lateral edges (20) and a radially external edge (21);
- an output element (8) rotationally movable around the axis (X) and exhibiting at least one window comprising two angularly spaced lateral edges and a radially external edge, an elastic return member (9) being capable of being received simultaneously in the window (15) of the input element (6) and in the window of the output element (8) so as to generate a force acting against rotation of the output element (8) with respect to the input element (6); and
- an additional element (10) rotationally movable around the axis (X) and integral with one of the input element (6) and output element (10), the additional element (10) exhibiting at least one edge (25), said edge (25) comprising at least one region (30) projecting radially into the window (15) of that one of the input element (6) and output element (8) with which the additional element (10) is integral,
the damper (2) being capable of being integrated into a friction disk (1) for a clutch, the input element (6) being constituted by a flange, the output element (8) being constituted by two guide washers axially surrounding the flange,
**characterized in that** the additional element (10) is constituted by a support disk capable of supporting at least one friction lining.

2. The torsional damper (2) according to Claim 1, the additional element (10) being integral with the input element (6).

3. The damper (2) according to Claim 1 or 2, comprising an elastic return member (9) received simultaneously in the window (15) of the input element (6) and in the window of the output element so as to generate a force acting against rotation of the output element with respect to the input element (6), the elastic return member (9) also being received radially internally with respect to the edge (25) of the additional element (10).

4. The damper (2) according to Claims 2 and 3, each angular end of the elastic return member (9) being in contact with a seat (27).

5. The damper (2) according to any one of the preceding claims, said region (30) of the edge (25) of the additional element (10) being a central region of said edge (25).

6. The damper (2) according to any one of Claims 1 to 5, said region (30) of the edge (25) of the additional element (10) being rectilinear.

7. The damper (2) according to any one of the preceding claims, the ratio between the angle (α₁) measured from the rotation axis (X) between the angular ends of said region (30), and the angle (α₂) measured from the rotation axis between the angular ends of the edge (25) of the additional element (10) in which that region (30) is configured, being between 0.15 and 0.5, in particular between 0.15 and 0.30.

8. The damper (2) according to any one of the preceding claims, the maximum distance (D) that said region (30) projects into the window of that one of the input element (6) and output element (8) with which the additional element (10) is integral being at least 0.2 mm.

9. The damper (2) according to any one of the preceding claims, the rigid connection between the additional element (10) and that one of the input element (6) and output element (8) with which the additional element (10) is integral comprising rivets (14).

10. The damper (2) according to Claim 9, the rigid connection between the additional element (10) and that one of the input element (6) and output element (8) with which the additional element is integral comprising a local weld of that portion of the additional element (10) defined radially internally by the edge (25) of the additional element, and that portion of the input element (6) or output element (8) defined radially externally by the radially external edge of its window.

11. The damper (2) according to any one of the preceding claims,
the input element (6) exhibiting a plurality of windows (15) succeeding one another angularly, each window (15) comprising two angularly spaced lateral edges (20) and a radially external edge (21);
the output element (8) exhibiting a plurality of windows succeeding one another angularly, each window comprising two angularly spaced lateral edges and a radially external edge; and
the additional element (10) exhibiting a plurality of windows (17), each window (17) comprising two angularly spaced lateral edges (23) and a radially external edge (25) in which said projecting region (30) is configured,
each window (17) of the additional element (10) being axially opposite at least a portion of a window of the output element (8) and at least a portion of a window of the input element (6).

12. A friction disk (1) for a clutch, comprising:
- a hub (3) extending along an axis;
- a torsional damper (2) according to any one of Claims 1 to 11; and
- at least one friction lining (12) carried by the support disk (10) of the damper.
